# EUROPEAN PATENT APPLICATION

(11) **EP 3 499 361 A1**
(43) Date of publication of application: **19.06.2019**
(21) Application number: 17206814.0
(22) Date of filing: 12.12.2017
(51) Int. Cl.: G06F 8/65

(54) **COMPUTER-IMPLEMENTED METHOD, ELECTRONIC DEVICE AND COMPUTER PROGRAM**

(71) Applicant: Vestel Elektronik Sanayi ve Ticaret A.S., 45030 Manisa (TR)
(72) Inventor: DÖMEKELI, Erhan, 45030 Manisa (TR)
(74) Representative: Thomas, Michael Andrew

(57) **Abstract**

There is provided a computer-implemented method for updating software in an electronic device (5). The electronic device (5) comprises a data processing arrangement (10, 15, 20) for executing a current version of the software with access to volatile memory (20) and to non-volatile memory (15). In the method, an updated version of the software is received and stored in the volatile memory (20). A separate software updating process (40) is triggered, for example by a user, for execution by the data processing arrangement (10, 15, 20), to: erase the current version of the software stored in the non-volatile memory (15); to transfer the received updated version of the software from the volatile memory (20) to the non-volatile memory (15); and to trigger a reset of the data processing arrangement (10, 15, 20) wherein the data processing arrangement (10, 15, 20) reads from the non-volatile memory (15) and executes the updated version of the software. An electronic device (5) and a computer program implementing the method are also provided.

## Description

### Technical Field

The present disclosure relates to a computer-implemented method, to an electronic device and to a computer program.

### Background

Electronic devices such as digital televisions, set-top boxes and other electronic devices controlled by software occasionally require an update to that software, ideally with minimal disturbance to the normal operation of the device.

Those devices provided with a network interface have the option of receiving software updates over a network. Televisions have access to broadcast signals which provides another channel for the receipt of software updates.

Software is typically stored in non-volatile memory such as that provided by flash memory devices. Each type of electronic device implements its own process for receiving and installing updates to software, usually involving a restart of an embedded or other type of data processing system to complete the update.

### Summary

According to a first aspect disclosed herein, there is provided a computer-implemented method for updating software in an electronic device, the electronic device comprising a data processing arrangement for executing a current version of the software with access to volatile memory and to non-volatile memory, the method comprising:
(i) receiving an updated version of the software and storing the received updated version of the software in the volatile memory; and
(ii) triggering execution of a separate software updating process by the data processing arrangement, comprising:
   (a) erasing the current version of the software stored in the non-volatile memory;
   (b) reading the received updated version of the software from the volatile memory and storing the received updated version of the software in the non-volatile memory; and
   (c) triggering a reset of the data processing arrangement wherein the data processing arrangement reads from the non-volatile memory and executes the updated version of the software.

By this method, the non-volatile memory provided in the electronic device is not required to store both a current version of the software controlling the electronic device and an updated version of the software, as in conventional during software updating processes. A greater proportion of the capacity of the non-volatile memory may therefore be made available to the storage of updated software of a larger size than may have been anticipated when the device was first configured.

The storing of received updated software in the volatile memory is a more rapid process than the more conventional storage of the received software directly into the non-volatile memory.

In an example, at (ii), the separate software updating process comprises terminating execution by the data processing arrangement of the current version of the software. The software updating process therefore controls the electronic device while the software updating process is implemented.

In an example, the non-volatile memory comprises two separately accessible portions of non-volatile memory and (b) comprises storing the updated version of the software in the non-volatile memory using one or both of the two separately accessible portions.

Non-volatile memory may conventionally be partitioned into two separately accessible portions so that both a current version and an updated version of the software may be stored simultaneously in an updating process. By this method, only one version of the software needs to be stored in the non-volatile memory, enabling a greater proportion of the available capacity of the non-volatile memory to be used to store larger versions of software.

In an example, (i) comprises receiving the updated version of the software and storing the received updated version of the software in the volatile memory as a background process. In this way, there is little or no disturbance to the normal operation of the electronic device while the updated version of the software is being received.

In an example, (ii) comprises providing a message for a user of the electronic device to prompt the user to trigger the separate software updating process. As the software updating process of the present disclosure involves the removal of the current version of the software from the electronic device, it is preferred for the user to control the timing of this process.

In an example, (i) comprises receiving an updated version of the software communicated as a broadcast signal received by the electronic device. Where the electronic device is able to receive and to decode broadcast signals, this provides one possible route for receiving software updates.

In an example, the electronic device comprises a network interface to a network and (i) comprises receiving the updated version of the software via the network. This provides another possible route for receiving software updates.

In an example, the method comprises receiving or requesting, by a communication via the network, a notification of the availability of the updated version of the software.

In an example, the method comprises, on receiving the notification of the availability of the updated version of the software, transmitting via the network a request to receive the updated version of the software.

In an example, the method comprises, on receiving the notification of the availability of the updated version of the software, receiving the updated version of the software by a scheduled broadcast of the updated version of the software received by the electronic device.

According to a second aspect disclosed herein, there is provided an electronic device, comprising a data processing arrangement configured with access to volatile memory and to non-volatile memory to execute software for controlling the electronic device, the data processing arrangement being configured to update a current version of the software, stored in the non-volatile memory, by:
(i) receiving an updated version of the software and storing the received updated version of the software in the volatile memory; and
(ii) executing a separate software updating process, to:
   (a) erase a current version of the software stored in the non-volatile memory;
   (b) read the received updated version of the software from the volatile memory and to store the received updated version of the software in the non-volatile memory; and
   (c) trigger a reset of the electronic device wherein the data processing arrangement reads from the non-volatile memory and executes the updated version of the software.

In an example of the electronic device, at (ii), the separate software updating process terminates execution by the data processing arrangement of the current version of the software.

In an example of the electronic device, the non-volatile memory comprises two separately accessible portions of non-volatile memory and the data processing arrangement is configured, at (b), to store the updated version of the software in the non-volatile memory using one or both of the two separately accessible portions.

In an example of the electronic device, the data processing arrangement is configured, at (i), to receive the updated version of the software and to store the received updated version of the software in the volatile memory as a background process.

According to a third aspect disclosed herein, there is provided a computer program which when installed and executed by a data processing arrangement of an electronic device, configured with access to volatile memory and to non-volatile memory, causes the data processing arrangement to implement the computer-implemented method according to the first aspect described above and as disclosed herein.

### Brief Description of the Drawings

To assist understanding of the present disclosure and to show how embodiments may be put into effect, reference is made by way of example to the accompanying drawings in which:
Figure 1 shows schematically a simplified example arrangement of components of a digital television in which a method according to the present disclosure may be applied; and
Figure 2 shows a flow diagram of an example process for receiving and installing updates to software to be executed by an electronic device, according to the present disclosure.

### Detailed Description

An increasing number of devices are being provided with network access and software-controlled functionality, including for example domestic appliances and "Internet of Things" devices. More conventionally, electronic devices such as digital televisions, set-top boxes for accessing and decoding subscription broadcast services, 'smart' mobile phones and other types of portable electronic device include network interfaces and significant levels of software-controlled functionality. Updates and upgrades to the software executed by one or more data processors in those devices may be frequent and are generally made available over a network or broadcast for receipt at predetermined times.

Typically, software executed by such devices, in particular those with so-called 'embedded' data processing facilities, is stored in solid-state non-volatile memory such as that provided by flash memory devices. When an update is required to such software, the updated software is also stored in the non-volatile memory and the data processing facility is thereafter arranged to read the updated software from the non-volatile memory and to execute it, preferably with minimal disturbance to normal operation of the device. This may be achieved, in one known example, by providing two partitions of flash memory such than a current operational version of the software may be stored in a first of the partitions and the second of the partitions typically remains unused other than when software updates are required. When an updated version of the software is received, it is stored in the second of the partitions so that both a current version and an updated version of the software coexist in the non-volatile memory pending the transfer of control to the updated version. When restarting the data processor(s), the software is read thereafter from the second of the partitions of the non-volatile memory, rather than from the first, and executed, until such time as the software is replaced in a future update.

Over the lifetime of an electronic device having an embedded data processing system and flash memory, software may undergo a number of updates, including upgrades which typically increase the size of the software and, therefore, the non-volatile memory capacity required for its persistent storage. At some stage, a non-volatile memory selected and configured at the time of manufacture of the device may no longer have the capacity to be able both to hold a current version of software and to operate an over-air download (OAD) process, for example, to receive and implement an update to the software.

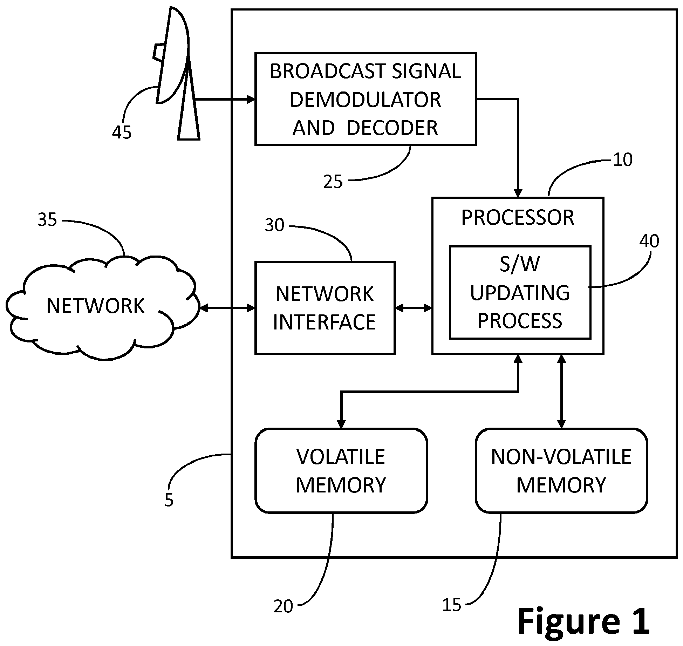

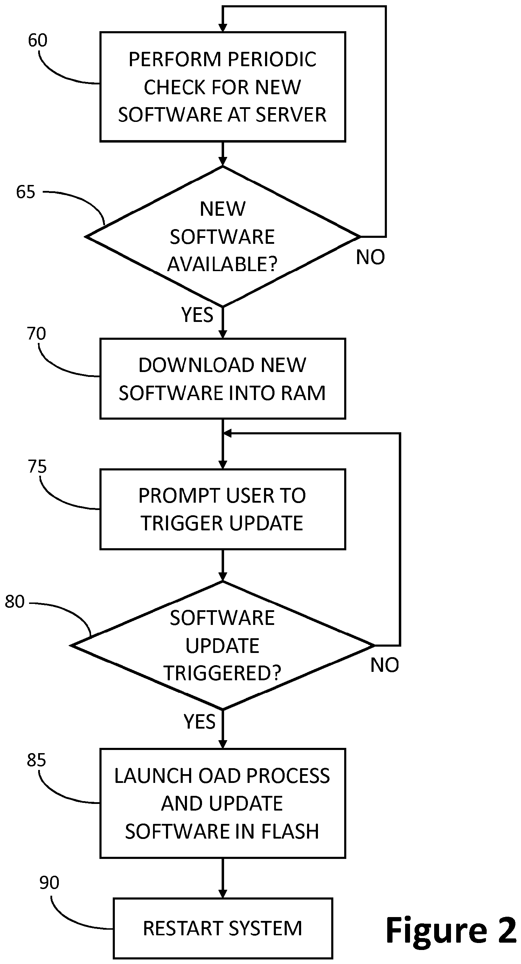

An arrangement and process will now be described with reference to Figure 1 and to Figure 2 as may be adopted by electronic devices to enable larger software updates and upgrades to be installed and accommodated in existing non-volatile memory. In particular, the arrangement and process according to the present disclosure enables the memory available within the electronic device to be used in a different way to enable updates to software of a size not initially anticipated for the device, for example where the size of the software exceeds the storage capacity of one of the partitions in the non-volatile memory.

Referring initially to Figure 1 there is shown schematically, by way of example, a highly simplified arrangement of components of a digital television 5 to which the process of the present disclosure may be applied. The television 5 includes a processor 10 arranged, at start-up, to install and to execute software, read from a non-volatile memory 15, to control operation of the television 5. The processor 10 is provided with access to volatile memory 20, for example random-access memory (RAM), for use by the executing software.

For the purposes of managing updates to software, the processor 10 is provided with access to a broadcast signal demodulator and decoder 25 of the television 5. The broadcast may be for example via satellite, cable or terrestrial antenna. If provided, the processor 10 is also arranged with access to a network interface 30 enabling access to a network 35. The network 35 may be or include the Internet, and possibly also a wired or wireless local area network at the user premises. The processor 10 may be arranged to trigger the download of a software update over the network 35 via the network interface 30 and to execute a separate software updating process 40 to install the update. Alternatively, the processor 10 may subscribe, using a dedicated functional OAD component of the software updating process 40, to receive and to install a scheduled broadcast OAD software update via the demodulator/decoder 25 and an antenna 45.

Conventionally, as mentioned above, any software update received by one of the two routes of broadcast 25, 45 or network 30, 35, is written to a spare partition of the non-volatile memory 15. A restart of the system causes the newly downloaded software to be read from the previously spare partition of the non-volatile memory 15 and executed by the processor 10.

Referring additionally to Figure 2, according to a software updating process of the present disclosure, availability of a software update is determined periodically at 60 by the processor 10. For example, the processor 10 may access (30) the network 35 in order to access and interrogate a centralised software update facility for the device 5. Alternatively, the processor 10 may respond to a notification of availability of an update received via the network 35. If, at 65, an update is available, then, at 70, the processor 10 triggers the receipt of updated software via one or both of the available channels, i.e. the network 35 or the broadcast OAD route 25, 45, and writes the received software to a dedicated buffer in the volatile memory 20. To this point, the process may operate as a background activity without disturbing the normal operation of the device.

With the updated software now stored in the buffer in volatile memory 20, the processor 10 prompts a user of the device, at 75, for example with a message to say that a software update is available to be installed, inviting the user to trigger the update. If, at 80, the user triggers the update, then the processor 10 triggers a software updating process, at 85, for example the software updating process 40, to operate separately from a main control process executed by the processor 10 under the control of a current version of the software. The processor 10 supplies to the executing software updating process 40 the address of the buffer in the volatile memory 20 in which the received updated software has been stored, before terminating execution of the main control process of the device.

The executing software updating process 40, now in control of the device 5, erases the existing stored version of the software from the non-volatile memory 15, reads the already downloaded updated software from the buffer in volatile memory 20 and writes the updated software to the non-volatile memory 15. When successfully stored, the executing software updating process 40 triggers a system restart, at 90, configured to read the newly installed software from the non-volatile memory 15 and to begin execution of the updated software by the processor 10.

Advantageously, storing downloaded software updates initially in the volatile memory 20 provides a download speed improvement over the alternative of storing software updates directly into non-volatile memory 15. This is due to the generally more rapid access time of volatile memory 20 as compared with that of non-volatile flash memory 15.

Conventionally, for a television receiver 5, software updates are broadcast and therefore need to be installed at predetermined times. However, where a device is connected to a network 35 via a respective network interface 30, then the option exists to request download of a software update over that network and thereafter install it in non-volatile memory 15.

An appropriate warning may be provided to a user of the device at 75 when prompting the user to trigger the software update, recognising that once underway, after the software updating process 40 has erased the current version of the software from the non-volatile memory 15, recovery of the device will not be easily achieved. That is, a supply of power to the device needs to be maintained until the storage of the updated software and any reconfiguration of the device 5 by the software updating process 40 is complete.

By this method, only one copy of software needs to be held in the non-volatile memory 15 at any one time during or after the download and installation of a software update. Any portion of the non-volatile memory 15 that might previously have been used only during a software updating process is thereby freed for use in the persistent storage of a current version of the software. In this way, new versions of the software having more facilities and therefore also of an increased size may be accommodated in the non-volatile memory 15, if necessary using both the first and the second of the partitions provided. For devices yet to be built, this method also enables smaller non-volatile memories 15 to be provided, recognising that the memory no longer needs to have a capacity that is at least twice the size of the largest software component likely to be received and installed.

As a further advantage of this method, the software updating process 40 may itself be updated using a received software update.

It will be understood that the data processors or data processing facilities referred to herein may in practice be provided by a single chip or integrated circuit or plural chips or integrated circuits, optionally provided as a chipset, and may include, besides data processes able to execute software, an application-specific integrated circuit (ASIC), field-programmable gate array (FPGA), digital signal processor (DSP), graphics processing unit (GPU), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices.

The electronic device may be for example a television, a DVD player, Blu Ray player, a set-top box, a desktop or laptop or tablet computer, etc., a video game console, a cellular phone (including a so-called "smart phone"), a printer, an electric appliance such as a "white goods" item such as a washing machine, a tumble dryer, a combined washing machine and tumble dryer, a dishwasher, a refrigeration apparatus such as a fridge or freezer or combined fridge-freezer, etc., etc. The device may be an "Internet of Things" or "IoT" device. In general, as used herein, an IoT device is a device that has an addressable interface (e.g. an Internet protocol (IP) address, a Bluetooth identifier (ID), a near-field communication (NFC) ID, etc.) and can transmit information to one or more other devices over a wired or wireless connection. IoT devices may in general include or be incorporated in for example sensors, refrigerators, ovens, microwaves, freezers, dishwashers, clothes washing machines, clothes dryers, furnaces, air conditioners, thermostats, televisions and other consumer electronic devices, light fixtures, vacuum cleaners, sprinklers, electricity meters, gas meters, etc.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A computer-implemented method for updating software in an electronic device (5), the electronic device (5) comprising a data processing arrangement (10, 15, 20) for executing a current version of the software with access to volatile memory (20) and to non-volatile memory (15), the method comprising:
(i) receiving (25, 45; 30, 35) an updated version of the software and storing the received updated version of the software in the volatile memory (20); and
(ii) triggering execution of a separate software updating process (40) by the data processing arrangement (10, 15, 20), comprising:
(a) erasing the current version of the software stored in the non-volatile memory (15);
(b) reading the received updated version of the software from the volatile memory (20) and storing the received updated version of the software in the non-volatile memory (15); and
(c) triggering a reset of the data processing arrangement (10, 15, 20) wherein the data processing arrangement (10, 15, 20) reads from the non-volatile memory (15) and executes the updated version of the software.

2. The computer-implemented method according to claim 1, wherein, at (ii), the separate software updating process (40) comprises terminating execution by the data processing arrangement (10, 15, 20) of the current version of the software.

3. The computer-implemented method according to claim 1 or claim 2, wherein the non-volatile memory (15) comprises two separately accessible portions of non-volatile memory and (b) comprises storing the updated version of the software in the non-volatile memory (15) using one or both of the two separately accessible portions.

4. The computer-implemented method according to any one of claims 1 to 3, wherein (i) comprises receiving the updated version of the software and storing the received updated version of the software in the volatile memory (20) as a background process.

5. The computer-implemented method according to any one of claims 1 to 4, wherein (ii) comprises providing a message for a user of the electronic device (5) to prompt the user to trigger the separate software updating process (40).

6. The computer-implemented method according to any one of claims 1 to 5, wherein (i) comprises receiving an updated version of the software communicated as a broadcast signal received (45, 25) by the electronic device (5).

7. The computer-implemented method according to any one of claims 1 to 6, wherein the electronic device (5) comprises a network interface (30) to a network (35) and (i) comprises receiving the updated version of the software via the network (35).

8. The computer-implemented method according to claim 7, comprising receiving or requesting, by a communication via the network (35), a notification of the availability of the updated version of the software.

9. The computer-implemented method according to claim 8, comprising, on receiving the notification of the availability of the updated version of the software, transmitting via the network (35) a request to receive the updated version of the software.

10. The computer-implemented method according to claim 8 or claim 9, comprising, on receiving the notification of the availability of the updated version of the software, receiving the updated version of the software by a scheduled broadcast of the updated version of the software received (25, 45) by the electronic device (5).

11. An electronic device (5), comprising a data processing arrangement (10, 15, 20) configured with access to volatile memory (20) and to non-volatile memory (15) to execute software for controlling the electronic device (5), the data processing arrangement (10, 15, 20) being configured to update a current version of the software, stored in the non-volatile memory (15), by:
(i) receiving (25, 45; 30, 35) an updated version of the software and storing the received updated version of the software in the volatile memory (20); and
(ii) executing a separate software updating process (40), to:
(a) erase a current version of the software stored in the non-volatile memory (15);
(b) read the received updated version of the software from the volatile memory 20) and to store the received updated version of the software in the non-volatile memory (15); and
(c) trigger a reset of the electronic device (5) wherein the data processing arrangement (10, 15, 20) reads from the non-volatile memory (15) and executes the updated version of the software.

12. The electronic device (5) according to claim 11, wherein, at (ii), the separate software updating process (40) terminates execution by the data processing arrangement (10, 15, 20) of the current version of the software.

13. The electronic device (5) according to claim 11 or claim 12, wherein the non-volatile memory (15) comprises two separately accessible portions of non-volatile memory and the data processing arrangement (10, 15, 20) is configured, at (b), to store the updated version of the software in the non-volatile memory (15) using one or both of the two separately accessible portions.

14. The electronic device (5) according to any one of claims 11 to 13, wherein the data processing arrangement (10, 15, 20) is configured, at (i), to receive the updated version of the software and to store the received updated version of the software in the volatile memory (20) as a background process.

15. A computer program which when installed and executed by a data processing arrangement (10, 15, 20) of an electronic device (5), configured with access to volatile memory (20) and to non-volatile memory (15), causes the data processing arrangement (10, 15, 20) to implement the computer-implemented method according to any one of claims 1 to 10.
